# EUROPÄISCHE PATENTSCHRIFT

(11) **EP 3 969 762 B1**
(45) Veröffentlichungstag und Bekanntmachung des Hinweises auf die Patenterteilung: **23.08.2023**
(21) Anmeldenummer: 20727913.4
(22) Anmeldetag: 14.05.2020
(51) Int. Cl.: F15B 11/036, B23B 31/26, B23Q 5/04

(54) **MODULARER PNEUMATIKZYLINDER UND VERWENDUNG DESSELBEN IN EINER MOTORSPINDEL**
MODULAR PNEUMATIC CYLINDER AND USE OF SAME IN A MOTOR SPINDLE
CYLINDRE PNEUMATIQUE MODULAIRE ET UTILISATION DE CELUI-CI DANS UNE BROCHE DE MOTEUR

(30) Priorität: 17.05.2019 DE 102019113087
(43) Veröffentlichungstag der Anmeldung: 23.03.2022
(73) Patentinhaber: Alfred Jäger GmbH, 61239 Ober-Mörlen (DE)
(72) Erfinder: VELTE, Mario, 61273 Wehrheim (DE); WOLFF, Frank, 35745 Herborn (DE); FISCHER, Axel, 61239 Ober-Mörlen (DE)
(74) Vertreter: Haarpatent Patentanwälte Krämer Meyer
(86) Internationale Anmeldenummer: PCT/DE2020/100420
(87) Internationale Veröffentlichungsnummer: WO 2020/233744

(56) Entgegenhaltungen:
- WO-A1-00/29753
- DE-A1- 4 401 779
- DE-A1- 19 920 264
- DE-U1- 9 111 366
- FR-A1- 2 717 113
- US-A- 3 485 141

## Beschreibung

Die Erfindung betrifft einen modularen Pneumatikzylinder mit mehreren Zylinderstufen und Verwendung desselben in einer Motorspindel. Pneumatikzylinder können aus Metall oder Kunststoff gefertigt sein. DE 1 932 938 U1 offenbart einen Pneumatikzylinder, bei dem Zylinderkopf, Zylinderrohr, Zylinderkolben und Zylinderboden aus Kunststoff bestehen.

DE 20 2005 001 207 U1 beschreibt einen Pneumatikzylinder mit einem rohrförmigen Zylindergehäuse aus Kunststoff, in dem ein Kolben durch Druckbeaufschlagung auf mindestens einer Seite entlang seiner Achse bewegt werden kann. Von dem Kolben geht eine Kolbenstange aus, die durch einen Zylinderdeckel aus Kunststoff drückt.

GM 76 07 218 U1 offenbart einen Kolben für einen Pneumatikzylinder, der aus zwei Hälften zusammengesetzt ist und aus einem gleitfähigen Kunststoff besteht. An beide rechtwinklig zur Bewegungsrichtung verlaufende Ringflächen ist eine eine Dichtlippe z. B. aus Polyurethan haltende Ringnut vorgesehen, in die die Dichtlippe eingepresst oder eingeformt ist. Zwischen seine Hälften ist eine aus Stahl gestanzte Scheibe eingesetzt.

Ein bekannter Pneumatikzylinder ist aus DE 91 11 366 U1 bekannt.

Der bekannte Pneumatikzylinder umfasst mehrere Zylinderstufen mit einer Kolbenstange, die mit Kolben in den einzelnen Stufen verbunden ist.

Ein gattungsgemäßer Pneumatikzylinder ist aus FR 2 717 113 A1 bekannt.

Auch in Motorspindeln werden Pneumatikzylinder eingesetzt. Als Motorspindel (auch Haupt- oder Arbeitsspindel genannt) wird der motorbetriebene Teil einer Werkzeugmaschine bezeichnet, welcher das sich drehende Werkzeug (Bohrer, Fräser, Gewindeschneider, Schleifkörper usw.) oder auch das sich drehende Werkstück hält. Hochfrequenzspindeln (HF Spindeln) für das High-Speed Cutting (HSC) ermöglichen extrem hohe Werkzeugdrehzahlen und um ein Vielfaches höhere Schnitt- und Vorschubgeschwindigkeiten. Eingesetzt wird die Motorspindel z. B. als sogenannte Arbeitsspindel in Werkzeugmaschinen.

Schnelllauf Frässpindeln bieten hohe Spitzenleistungen und sind dadurch ideal für schwere Zerspanungsaufgaben im HSC Bereich geeignet. Schnelllauf Frässpindeln werden durch einen Spindelträger oder einen im Gehäuse integrierten Spindelflansch aufgenommen. Darüber hinaus existieren Bohrspindeln mit hohen Drehzahlen und Gravierspindeln.

Spindeln zur Nass- und Trockenbearbeitung kommen speziell für die besonders hohen Anforderungen in der Dentaltechnik zum Einsatz. Aufgrund der verwendeten Materialen, der Steifigkeit der Spindel und der Absicherung gegen Verschmutzung sind diese Spindeln für Dentaltechnik gleichermaßen für die Trocken- und Nassbearbeitung einsetzbar.

Nachteilig bei den bekannten Pneumatikzylindern ist, dass hohe Herstellungskosten entstehen und die Zylinder für eine bestimmte Kraft ausgelegt sind, ohne dass diese im Nachhinein geändert werden kann.

Der Erfindung liegt die Aufgabe zugrunde, einen Pneumatikzylinder bereitzustellen, bei dem die von dem Zylinder zu erbringende Kraft einstellbar bzw. veränderbar ist.

Gelöst wird die Aufgabe durch die Merkmalskombination des Anspruchs 1. Bevorzugte Ausgestaltungen finden sich in den abhängigen Ansprüchen.

Die Aufgabe wird erfindungsgemäß dadurch gelöst, dass ein modularer Pneumatikzylinder bereitgestellt wird, mit mehreren Zylinderstufen, einem Zylinderboden, einem Zylinderkopf und einer zwischen beiden verlaufenden axialen Längsbohrung, die im Zylinderboden in einer Kolbenstange mündet und zur Aufnahme eines Befestigungsmittels vorgesehen ist, mit konzentrisch um die Bohrung angeordneten scheibenförmigen Zylinderstufen, die jeweils einen die Bohrung ringförmig umschließenden Kolben und eine sich vom Kolben radial erstreckende und mit Druckluft beaufschlagbare Kolbenscheibe umfassen, wobei die Kolben der Zylinderstufen mit der Kolbenstange in Wirkeingriff sind, so dass eine Druckbeaufschlagung des Pneumatikzylinders zu einem Hub der Kolbenstange führt.

Der Zylinder ist derart ausgestaltet, dass mehrere, insbesondere mindestens zwei modulare Zylinderstufen vorliegen, die zwischen dem Zylinderboden und dem beispielsweise als Endkappe ausgestaltetem Zylinderkopf vorgesehen sind und deren Kolben derart zusammenwirken, dass eine Kraft auf die Kolbenstange ausgeübt wird und in einem Hub resultiert. Bei Bedarf können weitere modulare Zylinderstufen eingebracht werden, so dass der Zylinder beispielsweise in einem Druckbereich von 1 Bar bis 20 Bar nutzbar ist. Das heißt, die Kraft des Zylinders kann durch die Aufnahme weiterer Zylinderstufen erhöht oder durch die Entfernung von Zylinderstufen verringert werden, was den erfindungsgemäßen Pneumatikzylinder in einem breiten Einsatzfeld verwendbar macht.

Im Sinne der Erfindung umfasst die Bezeichnung "Druckluft" ein gasförmiges Medium, das z. B., aber nicht abschließend, Luft oder Kohlendioxid sein kann. Es kann zum Beispiel vorgesehen sein, dass die Betätigung des Pneumatikzylinders mittels einem Kohlendioxid-Gasdruckbehälter oder einer Kohlendioxid-Kartusche oder einer Kohlendioxid-Kapsel erfolgt. Selbstverständlich kann auch ein gängiger Druckluftanschluss genutzt werden.

Die Einbringung von Druckluft für die Beaufschlagung der Kolbenscheiben kann in einer Ausgestaltung über die axiale Längsbohrung erfolgen, die pneumatisch über in den Kolben vorliegende Kanäle oder Ausnehmungen mit den Zylinderstufen bzw. den Kolbenscheiben verbunden ist. Die Druckluft kann über Ventile und Regler über die axiale Längsbohrung bzw. in der Längsbohrung vorliegende Kanäle in den Zylinder eingeleitet werden. Die axiale Längsbohrung ist zudem zur Aufnahme eines Befestigungsmittels, wie zum Beispiel einer zur Befestigung der Kolbenstange angedachten Schraube ausgebildet.

Die Zylinderstufen umfassen jeweils eine, einen Teil der Mantelfläche des Pneumatikzylinders formende Zylinderstufenwand und einen die Zylinderstufen voneinander trennenden Zylinderstufendeckel. Die Zylinderstufen liegen scheibenförmig übereinander zwischen Zylinderboden und Zylinderkopf angeordnet. Zwischen den Zylinderstufen können die Zylinderstufendeckel vorliegen, die quasi eine Zylinderstufe von der nachfolgenden trennen. Die Zylinderstufenwände der Zylinderstufen bilden in Summe die Mantelfläche oder zumindest einen Teil der Mantelfläche des Pneumatikzylinders. In einer Ausgestaltung können Zylinderstufenwand und Zylinderstufendeckel der Zylinderstufen einteilig gestaltet sein, so dass Montage und Handhabung vereinfacht sind.

Die Zylinderwände der Zylinderstufen sind von im Zylinderkopf beginnenden und im Zylinderboden mündenden axial verlaufenden Bohrungen durchsetzt, über die die Zylinderstufen mit Zylinderschrauben miteinander verbindbar sind. Je nach Bedarf können mehrere Bohrungen vorgesehen sein, um eine sichere Verbindung der Zylinderstufen zu garantieren. In den Zylinderwänden der Zylinderstufen sind Kanäle oder Ausnehmungen vorgesehen, die pneumatisch mit den Zylinderstufen und zumindest einer Bohrung in den Zylinderwänden verbunden sind, so dass eine Entlüftung über die zumindest eine Zylinderschraube erfolgen kann. Das heißt, die Entlüftung des Zylinders erfolgt über zumindest eine Zylinderschraube. Die Druckluft kann über entsprechende Kanäle bzw. Nuten gesteuert entweichen.

In einer Ausgestaltung ist vorgesehen, dass der Zylinder als einfachwirkender Zylinder ausgestaltet ist und beim Rückhub nach Druckbeaufschlagung eine Rückführung der Kolbenscheiben mittels wenigstens einer im Zylinderboden angeordneten und mit wenigstens einer Zylinderstufe in Wirkeingriff bringbaren Feder erreichbar ist. Bei dieser Ausgestaltung wird die Rückführung nicht durch Druckluft erreicht, sondern durch ein als Feder ausgestaltetes Federelement, das beispielsweise beim Vorhub gespannt und beim Rückhub entspannt wird. Nach Entlüftung des Zylinders, drückt die Feder die Kolbenstange bzw. die Kolben der Zylinderstufen im Rückhub zurück in ihre Ausgangs- oder Grundposition. Bei der Feder handelt es sich insbesondere um eine Wellenfeder.

Es kann jedoch auch vorgesehen sein, dass der Zylinder als doppeltwirkender Zylinder ausgestaltet ist, so dass Vorhub und Rückhub durch Ent- und/oder Belüftung des Zylinders erreichbar sind. Auf eine Feder für die Rückführung des Kolbens kann bei dieser Ausgestaltung verzichtet werden. Denn Vorhub und Rückhub können über Druckluft erreicht werden, die beim Vorhub die Kolbenscheibe bzw. Kolbenstange in die eine und beim Rückhub in die entgegengesetzte Richtung bewegen.

Es kann vorteilhaft sein, dass eine Kolbenscheibe oder mehrere Kolbenscheiben aus einer Membran aus Kunststoff oder Metall bestehen. Hierdurch kann das Gesamtgewicht und die Herstellungskosten des Zylinders stark reduziert werden. Insbesondere ist bevorzugt, dass die Kolbenscheibe oder die Kolbenscheiben als Gummimembran ausgestaltet sind.

Ferner kann vorgesehen sein, dass der Zylinder oder Bestandteile des Zylinders aus Metall, Kunststoff oder einer Kombination hieraus gefertigt sind. Im Wesentlichen können alle Bestandteile des Zylinders, wie beispielsweise die Kolbenscheiben oder die Zylinderstufen aus Metall, Kunststoff oder einer Kombination hieraus hergestellt sein, so dass ein geringes Gesamtgewicht und geringe Herstellungskosten realisierbar sind.

Die in der Kolbenstange mündende Längsbohrung im Zylinder dient insbesondere als Hohlraum der Durchführung bzw. Aufnahme einer Zylinderschraube. Die Bohrung kann in einer Ausgestaltung durch eine zwischen Zylinderboden und Zylinderkopf angeordnete Hülse gebildet sein, die, in Abhängigkeit der Anzahl der Zylinderstufen unterschiedliche Längen aufweisen kann und um die herum die Zylinderstufen anordbar sind. Alternativ kann die Bohrung durch die zwischen Zylinderboden und Zylinderkopf angeordneten Kolben gebildet sein. Das heißt, die Kolben der Zylinderstufen bilden insbesondere die Wandung der Bohrung bzw. des Hohlraums, um die bzw. um den sie angeordnet sind.

Jede Zylinderstufe weist eine mit Druckluft beaufschlagbare Kolbenscheibe auf, wobei die Beaufschlagung der Zylinderstufen in Summe zu einer Bewegung der Kolben bzw. der Kolbenstange führt. Die Kolben erstrecken sich axial, das heißt sind senkrecht zu den Kolbenscheiben ausgerichtet und verlaufen im Wesentlichen axial entlang der Längsbohrung und zwar bevorzugt in Richtung des Zylinderbodens. Die freien Enden der Kolben weisen also insbesondere in Richtung des Zylinderbodens, wogegen die freien Enden der Kolbenscheiben in Richtung der Zylinderstufenwand weisen. In einer Ausgestaltung ist vorgesehen, dass sich ein freies Ende des Zylinderstufendeckels an einen Kolben und ein freies Ende der Kolbenscheibe an die Zylinderstufenwand legen. Hierdurch kann eine kompakte Bauweise erreicht werden. An den Enden können zudem umlaufende Nuten für O-Ringe vorgesehen sein.

Um einen Raum zur Einleitung von Druckluft zu schaffen, kann vorgesehen sein, dass zwischen Zylinderstufendeckel und Kolbenscheibe ein Freiraum besteht, der pneumatisch mit der axialen Längsbohrung verbunden ist. Es hat sich gezeigt, dass die Leckagemenge klein gehalten werden kann und eine ausreichend große Wirkfläche zur Druckbeaufschlagung der Kolbenscheibe geschaffen wird.

Die Erfindung betrifft des Weiteren die Verwendung eines Pneumatikzylinders mit einer Motorspindel, die in einem Spindelgehäuse einen Elektromotor und eine von diesem drehend antreibbare Welle mit einer Werkzeugaufnahme für ein Werkzeug zur Werkstückbearbeitung enthält, wobei die Spindel eine Spannvorrichtung zum Festspannen eines Werkzeugs oder eines Werkzeughalters aufweist, wobei der Pneumatikzylinder an dem Spindelgehäuse direkt oder indirekt befestigt ist, und wobei die Kolbenstange mit einem in einer Längsbohrung der Spindel axial verschiebbaren Stößel eine Kraft und eine Bewegung übertragend in Wirkverbindung treten und die Spannvorrichtung in eine Lösestellung oder eine Schließstellung bewegen kann. Diesbezüglich ist es vorteilhaft, wenn der Zylinderboden des Pneumatikzylinders als Bestandteil des Spindelgehäuses ausgestaltet ist. Hierdurch kann die Spindel mit dem Pneumatikzylinder platzsparend konstruiert werden. Die zuvor genannten Ausgestaltungen und Vorteile des Pneumatikzylinders sind analog auf die bevorzugte Verwendung anzuwenden. Des Weiteren betrifft die Erfindung eine Kombination der zuvor beschriebenen Motorspindel mit dem Pneumatikzylinder.

Der Zylinder und die Motorspindel-Zylinder-Einheit haben zahlreiche Vorteile, wie z. B. Reduzierung der Herstellungskosten, austauschbare Welleneinheit mit Lagern als Reparatursatz, Reduzierung des Sperrluftverbrauchs, Optimierung von Produktions-, Montage-, Material- und Lieferprozessen, das Gehäuse als teuer Komponente entfällt im Wesentlichen, Platzersparnis durch kompakte Bauweise, weniger Dichtungen, z. B. O-Ringe werden benötigt, Komponenten, wie z. B. die Kolbenscheiben können vorteilhafterweise aus einem Kunststoff gefertigt werden, durch die modulare Bauweise können die gleichen Bauteile genutzt werden, Entlüftung kann durch die Zylinderschrauben erfolgen und einfacher Zusammenbau.

Der Pneumatikzylinder bzw. die Motorspindel-Zylinder-Einheit können in verschiedenen technischen Bereichen Anwendung finden, wie z. B. als Schleifspindel, Bohrspindel, Frässpindel oder Drehspindel in der Schleiftechnik; als Dentalspindel (Fräseinheit) in der Dentaltechnik, bei der eine voll automatisierte Fertigung auf engstem Raum mit einer Dentalspindel möglich ist und bei z. B. der bis zu 7 Verfahrachsen für Bearbeitungsaufträge zur Verfügung stehen; als Drehspindel im Werkzeug- und Formenbau; als Schnellfrequenz-Spindel in Roboterapplikationen, bei denen eine Bearbeitung von Material mit einem Roboter erfolgt; bei der Herstellung von Leiterplatten.

Die Erfindung wird nachfolgend anhand von Ausführungsbeispielen der Erfindung näher erläutert, die in der Zeichnung dargestellt sind. Es zeigen
- Figur 1: eine Seitenansicht eines vierstufigen Zylinders im Schnitt,
- Figur 2: eine Draufsicht des Zylinders gemäß Figur 1,
- Figur 3: eine perspektivische Ansicht des Zylinders gemäß Figur 1,
- Figur 4: eine Seitenansicht eines dreistufigen Zylinders im Schnitt,
- Figur 5: eine Seitenansicht einer Motorspindel mit Zylinder im Schnitt und
- Figur 6: eine Draufsicht der Figur 5.

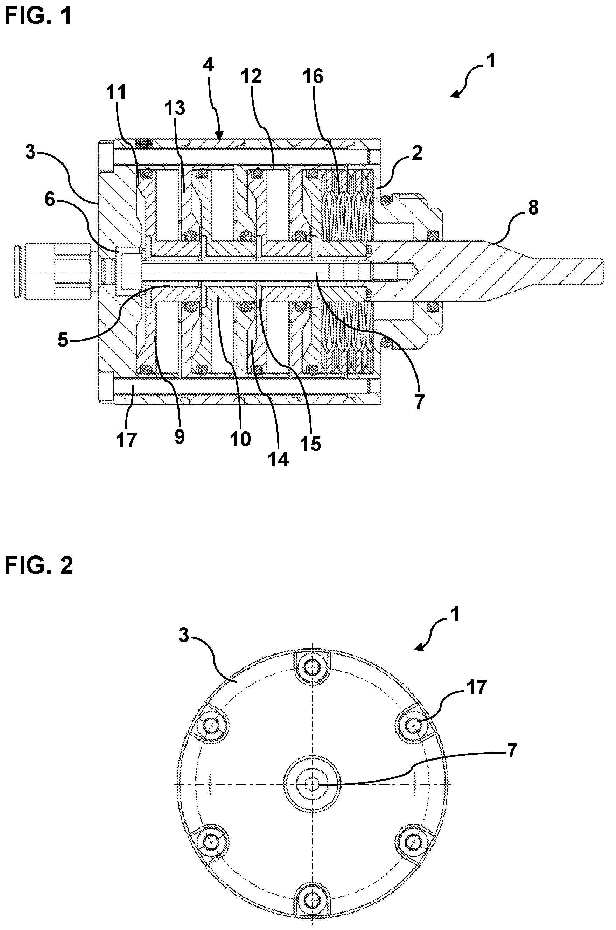

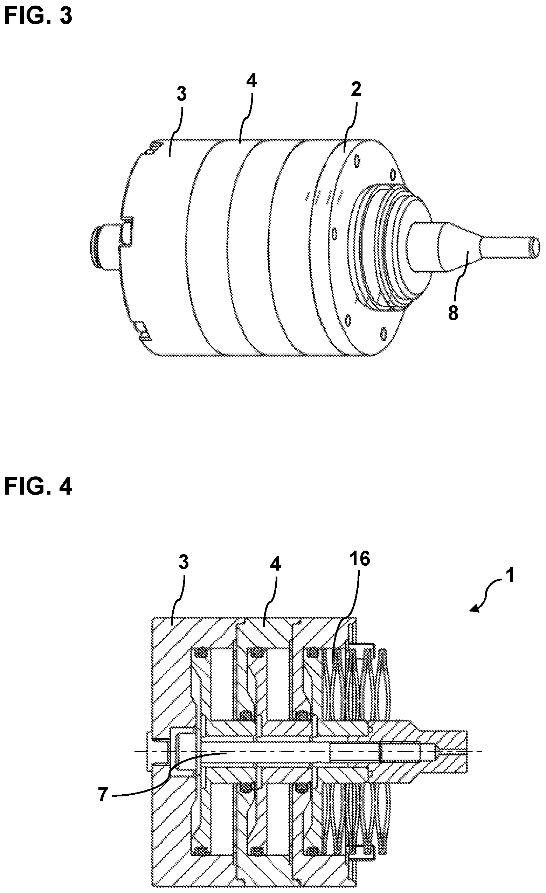

Figur 1 zeigt einen vierstufigen Zylinder in einer Seitenansicht im Schnitt, Figur 2 eine Draufsicht und Figur 3 eine perspektivische Ansicht des Zylinders gemäß Figur 1. Der Pneumatikzylinder 1 weist einen Zylinderboden 2 und einen gegenüberliegend angeordneten Zylinderkopf 3 auf. Zwischen dem Zylinderboden 2 und dem Zylinderkopf 3 sind Zylinderstufen 4 aufgenommen, die konzentrisch um eine Längsbohrung 5 bzw. einen entlang der Längsachse verlaufenden Durchbruch angeordnet sind. In dem Zylinderkopf 3 liegt eine Ausnehmung 6 für den Kopf einer Zylinderschraube 6 vor, wobei die Schraube 7 durch die Bohrungen 5 bzw. entsprechende Durchbrüche der Zylinderstufen 4 geführt ist und in einer Kolbenstange 8 mündet. Die Ausnehmung 6 ist über einen im Zylinderkopf 3 vorliegenden Durchbruch über einen Einschraubanschluss, z. B. mit einer Druckluftleitung verbindbar. Des Weiteren kann ein Druckluftschalldämpfer aus z. B. Sinterbronze vorgesehen sein. Die Kolbenstange 8 ist axial beweglich im Zylinderboden 2 gelagert und ragt mit ihrem freien Ende aus dem Zylinderboden 2 heraus. In dem Zylinderboden 2 kann ein sich an die Kolbenstange 8 legender O-Ring vorgesehen sein.

Die Zylinderstufen 4 umfassen eine sich radial von der Längsbohrung 5 erstreckenden Kolbenscheibe 9 mit einem Kolben 10, wobei der Kolben 10 senkrecht von der Kolbenscheibe 9 absteht und axial in Richtung Zylinderboden 1 ragt. Die ringförmig gestalteten Kolben 10 aller Zylinderstufen 4 umfassen in Summe die zentrale Längsbohrung. Die Kolbenscheibe 9 legt sich mit ihrem radialen, dem Kolben 10 entgegengesetztem freien Ende 11 an eine Innenfläche einer Zylinderstufenwand 12. An dem Ende 11 liegt eine Ausnehmung vor, die einen O-Ring beherbergt. Die Zylinderstufenwand 12 verläuft axial und knickt in einem 90° Winkel in Richtung Bohrung 5 ab und bildet dort einen Zylinderstufendeckel 13, der mit seinem radialen freien Ende wiederum an einem Kolben 10 einer nachfolgenden Kolbenscheibe 9 anliegt. An dem freien Ende des Zylinderstufendeckels 13 ist eine Ausnehmung für einen O-Ring vorgesehen. Zylinderstufendeckel 13 und Zylinderstufenwand 12 können einteilig gestaltet sein, wie in Figur 1 beispielhaft gezeigt. Je nach Anwendung sind aber auch zweiteilige Ausgestaltungen möglich.

Die Kolbenscheibe 9 ist derart zwischen Zylinderstufenwand 12 und dem Zylinderstufendeckel 13 angeordnet, dass sich zwar die Kolbenscheiben 9 zumindest bereichsweise an den Zylinderstufendeckel 13 legt, aber zumindest bereichsweise zwischen der Kolbenscheibe 9, dem Zylinderstufendeckel 13 und ggf. in einzelnen Positionen oder Ausgestaltungen der Kolbenscheibe 9 auch der Zylinderstufenwand 12 ein Freiraum 14 vorliegt. Die Kolbenscheibe 9 ist also zwischen Zylinderstufendeckel 13, Zylinderstufenwand 12 und einem Zylinderstufendeckel 13 einer nachfolgenden Zylinderstufe 4 angeordnet.

An ihrem oberen Ende, das heißt dem Ende, das dem Zylinderdeckel 3 zugewandt ist, weisen die Kolben 10 eine Ausnehmung 15 oder einen Kanal auf, der den Freiraum 14 pneumatisch mit der zentralen Längsbohrung 5 verbindet.

Der Kolben 10 der letzten Zylinderstufe 4 ist benachbart zum Zylinderboden 2 angeordnet. Um den Kolben 10 ist ein Federelement 16 angeordnet, das sich zum einen an der Kolbenscheibe 9 der letzten Zylinderstufe 4 und zum anderen am Zylinderboden 2 anlegt. Bei dem Federelement 16 kann es sich z. B. um eine Wellenfeder handeln.

Die Zylinderstufenwände 12 der Kolbenscheiben 9 sind von Bohrungen durchsetzt, die der Aufnahme einer Befestigungsschraube 17 dienen, die vom Zylinderkopf 3 kommend im Zylinderboden 2 münden und somit die einzelnen Bestandteile des Pneumatikzylinders 1 miteinander verbinden. Die am äußeren Umfang des Pneumatikzylinders 1 vorliegenden Befestigungsschrauben sind gut in Figur 2 zu erkennen.

Bestandteile des Zylinders 1, z. B. Zylinderstufen 4, Kolbenscheiben 9, Kolbenstange 8, Zylinderboden 2, Zylinderkopf 3, Wellenfeder und/oder der Zylinder an sich können aus Metall oder einem Kunststoff gefertigt sein. Des Weiteren kann vorgesehen sein, dass die Kolbenscheiben 9 aus einer Kunststoff- oder Metallmembran bestehen. Der Zylinder 1 kann einen modularen Zylinderboden 2 und einen modularen Zylinderkopf 3 aufweisen.

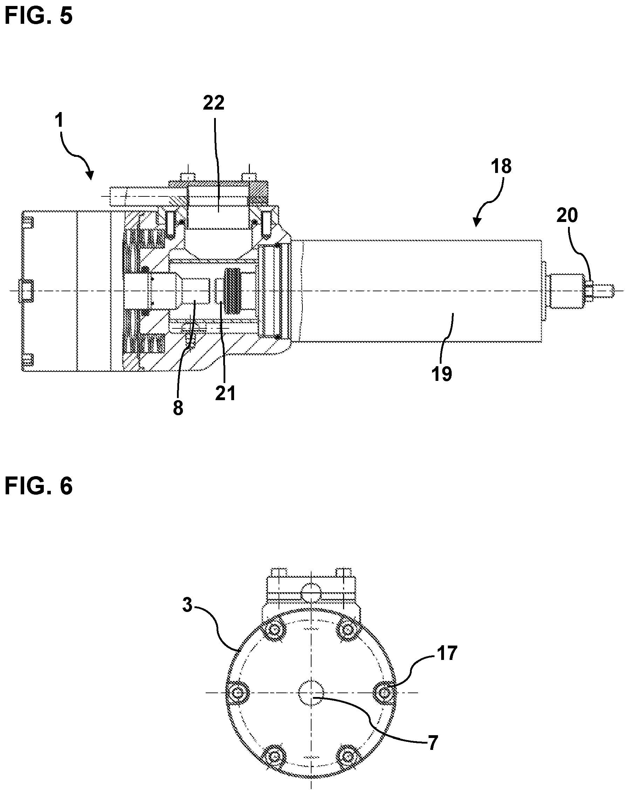

Figur 4 zeigt einen dreistufigen Pneumatikzylinder und Figur 5 eine Draufsicht des in Figur 4 dargestellten Pneumatikzylinders. Bezüglich des Aufbaus wird auf Figur 1 bzw. Figuren 2 und 3 verwiesen. Die erfindungsgemäßen Pneumatikzylinder können mehr oder weniger Zylinderstufen 4 aufweisen, wobei Zylinderstufen 4 bei Bedarf einfach durch Lösen der zentralen in der Längsbohrung vorliegenden Schraube 7 und den Befestigungsschrauben 17 einfach entfernt oder hinzugefügt werden können. Die Zylinderstufen 4 sind vorzugsweise identisch aufgebaut, so dass ein Austausch, Ergänzung und Einbau bzw. Ausbau einfach möglich sind. Hierdurch gestaltet sich auch die Wartung des Pneumatikzylinders 1 einfach.

In einer Grund- oder Ruhestellung, bei dem keine Druckluft anliegt, berühren sich zwar die Kolben 10 der Zylinderstufen 4 sind also im Wirkeingriff, üben aber noch keine Kraft auf die Kolbenstange 8 aus, da die Kolben 9 von der Federkraft des Federelements 16 in der Grundstellung gehalten werden. Je nach Bedarf kann das Federelement 16 bereits in der Grundstellung eine Kraft auf die Kolben 9 ausüben. Es kann jedoch auch vorgesehen sein, dass das Federelement 16 in der Grundstellung entspannt vorliegt, also keine Kraft auf die Kolben 9 ausübt. Zur Betätigung des Pneumatikzylinders 1 kann Druckluft über die zentrale Längsbohrung 5 in die Freiräume 14 eingebracht werden und einen Druck auf die Kolbenscheiben 9 ausüben, so dass sich die axial beweglich gelagerten Kolbenscheiben 9 mit den Kolben 10 der Zylinderstufen 4 axial in Richtung des Zylinderbodens 2 bewegen. Hierbei wird das Federelement 16 entgegen seiner Federkraft komprimiert. Die Kolben 9 üben eine Kraft auf die Kolbenstange 8 aus, die sich in Figur 1 entsprechend nach rechts bewegt. Der Vorhub der Kolben 9 ist beendet, sobald die Bewegung der Kolbenscheiben 10 durch das Anliegen an den Zylinderstufendeckel 13 der nachfolgenden Zylinderstufe 4 zum Erliegen kommt, bzw. sobald das Federelement 16 maximal komprimiert ist. Die Endstellung der Kolbenscheiben 10 kann entsprechend je nach Anwendung definiert und entsprechend eingestellt sein. So können beispielsweise Dämpfungselemente auf den Zylinderstufendeckeln 13 vorliegen, um eine Beschädigung der Kolbenscheiben 9 zu vermeiden und die Bewegung zu begrenzen.

Für den Rückhub wird der Pneumatikzylinder 1 über Kanäle, die in den Bohrungen der Befestigungsschrauben 17 in den Zylinderstufenwänden 12 vorliegen, entlüftet und die Kolbenscheiben 9 mit den Kolben 10 durch das sich entspannende Federelement 16 in ihre Grundstellung bewegt. Die mit den Kolben 10 der Zylinderstufen 4 verbundene Kolbenstange 8 wird folglich gemäß Figur 1 nach links bewegt.

Der Pneumatikzylinder 1 kann auch als zweifachwirkender Pneumatikzylinder 1 ausgestaltet sein, so dass auch der Rückhub über Druckluft und nicht mittels eines Federelements 16 erfolgt. Hierbei kann nach oder gleichzeitig mit Entlüftung des Pneumatikzylinders 1 erneut Druckluft über weitere Kanäle eingebracht werden, so dass quasi die Kolbenscheiben 9 von einer anderen Seite mit Druckluft beaufschlagt werden und sich die Kolbenscheiben 9 bei dem Rückhub in die Richtung bewegen, die der Richtung des Vorhubs entgegengesetzt ist.

Figur 5 zeigt eine Seitenansicht einer Motorspindel mit einer Ausgestaltung eines Pneumatikzlinders im Schnitt und Figur 6 eine Draufsicht derselben. Die Motorspindel 18 besteht aus einem mehrteiligen Spindelgehäuse 19, einer gelagerten Spindel mit einem Rotor. Die Spindel ist mit einer durchgehenden Längsbohrung versehen, die an dem in der Zeichnung rechten Ende in einer Werkzeugaufnahme 20 mündet. Die Werkzeugaufnahme 20 kann entweder unmittelbar an einem Bearbeitungswerkzeug oder an einem Werkzeughalter angebracht sein. In der Längsbohrung ist axial verschiebbar eine Spannvorrichtung und ein mit dieser fest verbundener Stößel 21 axial verschiebbar gelagert.

Der Zylinder 1 kann zum Beispiel an dem vom Werkzeughalter 20 abgekehrten Ende des Spindelgehäuses 19 nahe einer Motoreinheit befestigt sein. Zur Befestigung kann eine Adapterplatte 22 genutzt werden, über die der Pneumatikzylinder 1 einfach mittels eines Gewindes an der Motorspindel 18 befestigt werden kann, so dass eine einfache Montage / Demontage möglich ist.

In der gespannten Stellung ist der Werkzeughalter 20 durch die Spannvorrichtung mit Hilfe der Kraft von Federn gespannt. Soll der Werkzeughalter 20 mit einem daran befestigten Werkzeug gewechselt werden, so wird zum Beispiel nach dem Stillsetzen der Spindel Druckluft durch die zentrale Bohrung des Zylinders 1 eingeblasen und die Kolbenscheiben beaufschlagt, so dass die Kolbenstange 8 entgegen der Kraft der Wellenfeder in eine aus dem Pneumatikzylinder 1 weiter herausgefahrene Stellung bewegt wird. Die Kolbenstange 8 kommt hierbei mit dem Kopf des Stößels 21 in Kontakt und bewegt den Stößel 21 mit der Spannvorrichtung soweit, dass der Spannzapfen von der Spannvorrichtung freigegeben und der Werkzeugkegel gelöst wird. Der Werkzeughalter 20 und das daran befestigte Werkzeug können auf diese Weise von Hand oder automatisch entnommen werden.

Nach dem Wechsel wird der Zylinder 1 über die Zylinderschrauben entlüftet und die Kolbenstange 8 wird durch die Federkraft der Wellenfeder wieder in die Grundstellung gebracht, in der kein Kontakt zwischen Stößel 21 und Kolbenstange 8 vorliegt.

Die Pneumatikzylinder-Motorspindel-Kombination hat zahlreiche Vorteile, wie z. B. reduzierte Federkraft aufgrund des Zylinders, vereinfachtes und verschraubtes Motorgehäuserohr, Rotor kann aus Aluminiumdruckguss anstelle von Kupferstangen hergestellt sein, Druckentlastung kann über Ausgleichsscheibe erfolgen, Stator nur imprägniert, Kühlung durch den Motorspalt ohne Spiralnut, Aluminiumgehäuse des Zylinders kann als tragendes Element mit Zylinderboden vorgesehen sein, die Gesamtlänge wird erheblich reduziert. Außerdem kann der Pneumatikzylinder oder Teile hiervon aus Kunststoff bestehen, so dass der Pneumatikzylinder ein geringes Gewicht aufweist, so dass er vielfältig einsetzbar ist.

## Patentansprüche

1. Modularer Pneumatikzylinder (1) mit mehreren Zylinderstufen (4), einem Zylinderboden (2), einem Zylinderkopf (3) und einer zwischen beiden verlaufenden axialen Längsbohrung (5), die im Zylinderboden (2) in einer Kolbenstange (8) mündet und zur Aufnahme eines Befestigungsmittels (7) vorgesehen ist, mit konzentrisch um die Bohrung (5) angeordneten scheibenförmigen Zylinderstufen (4), die jeweils einen die Bohrung (5) ringförmig umschließenden Kolben (10) und eine sich vom Kolben (10) radial erstreckende und mit Druckluft beaufschlagbare Kolbenscheibe (9) umfassen wobei die Zylinderstufen (4) jeweils eine, einen Teil der Mantelfläche des Pneumatikzylinders (1) formende Zylinderstufenwand (12) und einen die Zylinderstufen (4) voneinander trennenden Zylinderstufendeckel (13) umfassen und wobei die Kolben (10) der Zylinderstufen (4) mit der Kolbenstange (8) in Wirkeingriff sind, so dass eine Druckbeaufschlagung des Pneumatikzylinders (1) zu einem Hub der Kolbenstange (8) führt,
wobei die Zylinderstufenwände (12) der Zylinderstufen (4) von im Zylinderkopf (3) beginnenden und im Zylinderboden (2) mündenden axial verlaufenden Bohrungen durchsetzt sind, über die die Zylinderstufen (4) mit Zylinderschrauben (17) miteinander verbindbar sind und **dadurch gekennzeichnet, dass** in den Zylinderstufenwänden (12) der Zylinderstufen (4) Kanäle oder Ausnehmungen vorgesehen sind, die pneumatisch mit den Zylinderstufen (4) und zumindest einer Bohrung in den Zylinderstufenwänden (12) verbunden sind, so dass eine Entlüftung des Pneumatikzylinders über zumindest eine Zylinderschraube (17) erfolgen kann.

2. Pneumatikzylinder (1) nach Anspruch 1, **dadurch gekennzeichnet, dass** die Kolbenscheiben (9) aus einer Membran aus Kunststoff oder Metall bestehen.

3. Pneumatikzylinder (1) nach Anspruch 1, **dadurch gekennzeichnet, dass** die Kolbenscheiben (9) als Gummimembran ausgestaltet sind.

4. Pneumatikzylinder (1) nach einem der vorhergehenden Ansprüche, **dadurch gekennzeichnet, dass** der Zylinder (1) als doppeltwirkender Pneumatikzylinder ausgestaltet ist, so dass Vorhub und Rückhub durch Ent- und/oder Belüftung des Pneumatikzylinder erreichbar sind.

5. Pneumatikzylinder (1) nach einem der vorhergehenden Ansprüche 1 bis 3, **dadurch gekennzeichnet, dass** der Pneumatikzylinder als einfachwirkender Pneumatikzylinder ausgestaltet ist und beim Rückhub nach Druckbeaufschlagung eine Rückführung der Kolbenscheiben (9) mittels wenigstens einer im Zylinderboden (2) angeordneten und mit wenigstens einer Zylinderstufe (4) in Wirkeingriff bringbaren Feder (16) erreichbar ist.

6. Pneumatikzylinder (1) nach Anspruch 5, **dadurch gekennzeichnet, dass** die Feder (16) als Wellenfeder ausgestaltet ist.

7. Pneumatikzylinder (1) nach einem der vorhergehenden Ansprüche, **dadurch gekennzeichnet, dass** eine Einbringung von Druckluft über die axiale Längsbohrung (5) erfolgt, die pneumatisch über in den Kolben (10) vorliegende Kanäle oder Ausnehmungen (6) mit den Zylinderstufen (4) verbunden ist.

8. Pneumatikzylinder (1) nach einem der vorhergehenden Ansprüche, **dadurch gekennzeichnet, dass** Zylinderstufenwand (12) und Zylinderstufendeckel (13) der Zylinderstufen (4) einteilig gestaltet sind.

9. Pneumatikzylinder (1) nach einem der vorhergehenden Ansprüche, **dadurch gekennzeichnet, dass** der Zylinder (1) oder Bestandteile des Zylinders (1) aus Metall, Kunststoff oder einer Kombination hieraus gefertigt sind.

10. Pneumatikzylinder (1) nach einem der vorhergehenden Ansprüche, **dadurch gekennzeichnet, dass** sich ein freies Ende des Zylinderstufendeckels (13) an einen Kolben (10) und ein freies Ende der Kolbenscheibe (9) an die Zylinderstufenwand (12) legen.

11. Pneumatikzylinder (1) nach einem der vorhergehenden Ansprüche, **dadurch gekennzeichnet, dass** zwischen Zylinderstufendeckel (13) und Kolbenscheibe (9) te ein Freiraum (14) besteht, der pneumatisch mit der axialen Längsbohrung (5) verbunden ist.

12. Verwendung eines Pneumatikzylinders (1) nach einem der vorhergehenden Ansprüche mit einer Motorspindel (18), die in einem Spindelgehäuse (19) einen Elektromotor und eine von diesem drehend antreibbare Spindel mit einer Werkzeugaufnahme (20) für ein Werkzeug zur Werkstückbearbeitung enthält, wobei die Spindel eine Spannvorrichtung zum Festspannen eines Werkzeugs oder eines Werkzeughalters aufweist, wobei der Pneumatikzylinder (1) an dem Spindelgehäuse (19) direkt oder indirekt befestigt ist, und wobei die Kolbenstange (8) mit einem in einer Längsbohrung der Spindel axial verschiebbaren Stößel (21) eine Kraft und eine Bewegung übertragend in Wirkverbindung treten und die Spannvorrichtung in eine Lösestellung oder eine Schließstellung bewegen kann.

13. Verwendung nach Anspruch 12, **dadurch gekennzeichnet, dass** der Zylinderboden (2) des Pneumatikzylinders (1) als Bestandteil des Spindelgehäuses (19) ausgestaltet ist.

## Claims

1. Modular pneumatic cylinder (1) comprising a plurality of cylinder stages (4), a cylinder bottom (2), a cylinder head (3) and an axial longitudinal bore (5) extending between the two, which bore opens in a piston rod (8) in the cylinder bottom (2) and is provided for receiving a fastening means (7), comprising discshaped cylinder stages (4) which are arranged concentrically around the bore (5) and each comprise a piston (10) which annularly surrounds the bore (5) and a piston disc (9) which extends radially from the piston (10) and can be acted upon by compressed air, the cylinder stages (4) each comprising a cylinder stage wall (12) which forms part of the lateral surface of the pneumatic cylinder (1) and a cylinder stage cover (13) which separates the cylinder stages (4) from one another, and the pistons (10) of the cylinder stages (4) being in operative engagement with the piston rod (8), such that a pressurization of the pneumatic cylinder (1) leads to a stroke of the piston rod (8),
wherein the cylinder stage walls (12) of the cylinder stages (4) being penetrated by axially extending bores beginning in the cylinder head (3) and opening in the cylinder bottom (2), via which bores the cylinder stages (4) can be connected to one another by cylinder screws (17), **characterized in that** channels or recesses are provided in the cylinder stage walls (12) of the cylinder stages (4), which channels or recesses are pneumatically connected to the cylinder stages (4) and at least one bore in the cylinder stage walls (12), so that venting of the pneumatic cylinder can take place via at least one cheese head screw (17).

2. Pneumatic cylinder (1) according to claim 1, **characterized in that** the piston discs (9) consist of a diaphragm made of a plastics material or metal.

3. Pneumatic cylinder (1) according to claim 1, **characterized in that** the piston discs (9) are designed as a rubber diaphragm.

4. Pneumatic cylinder (1) according to any of the preceding claims, **characterized in that** the cylinder (1) is designed as a double-action pneumatic cylinder, so that a forward stroke and return stroke can be achieved by the pneumatic cylinder being vented and/or supplied with air.

5. Pneumatic cylinder (1) according to any of the preceding claims 1 to 3, **characterized in that** the pneumatic cylinder is designed as a single-action pneumatic cylinder and, during the return stroke after pressurization, a return of the piston discs (9) can be achieved by means of at least one spring (16) which is arranged in the cylinder bottom (2) and can be brought into operative engagement with at least one cylinder stage (4).

6. Pneumatic cylinder (1) according to claim 5, **characterized in that** the spring (16) is designed as a wave spring.

7. Pneumatic cylinder (1) according to any of the preceding claims, **characterized in that** compressed air is introduced via the axial longitudinal bore (5), which is pneumatically connected to the cylinder stages (4) via channels or recesses (6) in the piston (10).

8. Pneumatic cylinder (1) according to any of the preceding claims, **characterized in that** the cylinder stage wall (12) and the cylinder stage cover (13) of the cylinder stages (4) are formed in one piece.

9. Pneumatic cylinder (1) according to any of the preceding claims, **characterized in that** the cylinder (1) or components of the cylinder (1) are made of metal, plastics material or a combination thereof.

10. Pneumatic cylinder (1) according to any of the preceding claims, **characterized in that** a free end of the cylinder stage cover (13) abuts a piston (10) and a free end of the piston disc (9) abuts the cylinder stage wall (12).

11. Pneumatic cylinder (1) according to any of the preceding claims, **characterized in that** there is a free space (14) between the cylinder stage cover (13) and the piston disc (9), which space is pneumatically connected to the axial longitudinal bore (5).

12. Use of a pneumatic cylinder (1) according to any of the preceding claims, comprising a motor spindle (18), which, in a spindle housing (19), contains an electric motor and a spindle which can be rotatably driven thereby and has a tool receptacle (20) for a tool for workpiece machining, wherein the spindle has a clamping device for clamping a tool or a tool holder, wherein the pneumatic cylinder (1) is fastened directly or indirectly to the spindle housing (19), and wherein the piston rod (8) can be brought into operative connection, in a forcetransmitting and movement-transmitting manner, with a plunger (21) which is axially displaceable in a longitudinal bore of the spindle, and the clamping device can move into a release position or a closed position.

13. Use according to claim 12, **characterized in that** the cylinder bottom (2) of the pneumatic cylinder (1) is formed as a component of the spindle housing (19).

## Revendications

1. Vérin pneumatique modulaire (1) avec plusieurs étages de cylindre (4), un fond de cylindre (2), une tête de cylindre (3) et un alésage longitudinal axial (5) qui s'étend entre les deux et qui débouche dans le fond de cylindre (2) dans une tige de piston (8), et qui est prévu pour recevoir un moyen de fixation (7), avec des étages de cylindre (4) en forme de disque disposés de façon concentrique autour de l'alésage (5) et qui comprennent chacun un piston (10) entourant l'alésage (5) de manière annulaire et un disque de piston (9) s'étendant radialement à partir du piston (10) et pouvant être soumis à de l'air comprimé, les étages de cylindre (4) comprenant chacun une paroi d'étage de cylindre (12) formant une partie de la surface d'enveloppe du vérin pneumatique (1) et un couvercle d'étage de cylindre (13) séparant les étages de cylindre (4) les uns des autres, et les pistons (10) des étages de cylindre (4) étant en prise active avec la tige de piston (8), de sorte qu'une sollicitation en pression du vérin pneumatique (1) entraîne une course de la tige de piston (8), les parois d'étage de cylindre (12) des étages de cylindre (4) étant traversées par des alésages axiaux commençant dans la tête de cylindre (3) et débouchant dans le fond de cylindre (2), par lesquels les étages de cylindre (4) peuvent être reliés les uns aux autres par des vis de cylindre (17), et **caractérisé en ce que** des canaux ou des évidements sont prévus dans les parois d'étage de cylindre (12) des étages de cylindres (4) et sont reliés de façon pneumatique aux étages de cylindres (4) et à au moins un alésage dans les parois d'étage de cylindre (12), de sorte qu'une purge d'air du vérin pneumatique peut être effectuée par l'intermédiaire d'au moins une vis de cylindre (17).

2. Vérin pneumatique (1) selon la revendication 1, **caractérisé en ce que** les disques de piston (9) sont constitués d'une membrane en matière plastique ou en métal.

3. Vérin pneumatique (1) selon la revendication 1, **caractérisé en ce que** les disques de piston (9) sont conçus comme une membrane en caoutchouc.

4. Vérin pneumatique (1) selon l'une des revendications précédentes, **caractérisé en ce que** le vérin (1) est conçu comme un vérin pneumatique à double effet, de sorte que la course d'avance et la course de retour peuvent être obtenues par la purge et/ou l'alimentation du vérin pneumatique.

5. Vérin pneumatique (1) selon l'une des revendications précédentes 1 à 3, **caractérisé en ce que** le vérin pneumatique est conçu comme un vérin pneumatique à simple effet et, lors de la course de retour après mise sous pression, un retour des disques de piston (9) peut être obtenu au moyen d'au moins un ressort (16) disposé dans le fond de cylindre (2) et pouvant être mis en prise active avec au moins un étage de cylindre (4).

6. Vérin pneumatique (1) selon la revendication 5, **caractérisé en ce que** le ressort (16) est conçu comme un ressort en zigzag.

7. Vérin pneumatique (1) selon l'une des revendications précédentes, **caractérisé en ce qu'**une introduction d'air comprimé s'effectue par l'intermédiaire de l'alésage longitudinal axial (5) qui est relié de façon pneumatique aux étages de cylindre (4) par l'intermédiaire de canaux ou d'évidements (6) présents dans les pistons (10).

8. Vérin pneumatique (1) selon l'une des revendications précédentes, **caractérisé en ce que** la paroi d'étage de cylindre (12) et le couvercle d'étage de cylindre (13) des étages de cylindre (4) sont conçus en une seule pièce.

9. Vérin pneumatique (1) selon l'une des revendications précédentes, **caractérisé en ce que** le vérin (1) ou les composants du vérin (1) sont fabriqués en métal, en plastique ou en une combinaison de ces matériaux.

10. Vérin pneumatique (1) selon l'une des revendications précédentes, **caractérisé en ce qu'**une extrémité libre du couvercle d'étage de cylindre (13) s'appuie sur un piston (10) et une extrémité libre du disque de piston (9) s'appuie sur la paroi d'étage de cylindre (12).

11. Vérin pneumatique (1) selon l'une des revendications précédentes, **caractérisé en ce qu'**un espace libre (14) est présent entre le couvercle d'étage de cylindre (13) et le disque de piston (9), lequel espace libre est relié de façon pneumatique à l'alésage longitudinal axial (5).

12. Utilisation d'un vérin pneumatique (1) selon l'une des revendications précédentes avec un moteur broche (18) qui contient dans un boîtier de broche (19) un moteur électrique et une broche pouvant être entraînée en rotation par celui-ci avec un porte-outil (20) pour un outil destiné à l'usinage de pièces, la broche présentant un dispositif de serrage pour serrer un outil ou un porte-outil, le vérin pneumatique (1) étant fixé directement ou indirectement sur le boîtier de broche (19), et la tige de piston (8) entrant en liaison active avec un poussoir (21) pouvant coulisser de façon axiale dans un alésage longitudinal de la broche en transmettant une force et un mouvement, et pouvant déplacer le dispositif de serrage dans une position de desserrage ou une position de fermeture.

13. Utilisation selon la revendication 12, **caractérisée en ce que** le fond de cylindre (2) du vérin pneumatique (1) est conçu comme partie intégrante du boîtier de la broche (19).
